# EUROPÄISCHE PATENTANMELDUNG

(11) **EP 1 806 677 A1**
(43) Veröffentlichungstag der Anmeldung: **11.07.2007**
(21) Anmeldenummer: 05027094.1
(22) Anmeldetag: 12.12.2005
(51) Int. Cl.: G06F 21/24

(54) **Datenverarbeitungsobjekt mit Zugriffsschutz und Zugriffsverfahren**

(71) Anmelder: SIEMENS AKTIENGESELLSCHAFT, 80333 München (DE)
(72) Erfinder: Herberth, Harald, 90522 Oberasbach (DE)

(57) **Zusammenfassung**

Die Erfindung betrifft ein Datenverarbeitungsobjekt (1) und ein Verfahren zum Zugriffsschutz auf mindestens eine Datenmenge (2,3) des Objekts (1). Das Datenverarbeitungsobjekt (1) umfasst ein Mittel (4) zum Zuordnen von Zugriffsberechtigungen (5) zu Benutzerkennungen (6), wobei eine Zugriffsberechtigung (5) den Zugriff auf mindestens eine Datenmenge (2, 3) ermöglicht. Durch ein Objektpasswort (8) wird ein Zugriff auf die Datenmengen (2, 3) des Objekts (1) und auf die Mittel (4) zum Zuordnen der Zugriffsberechtigungen (5) zu Benutzerkennungen (6) ermöglicht. Anschließend kann das Objekt (1) mit Zugriffskontrolle benutzerspezifisch bearbeitet werden, ohne dass jeder Bearbeiter das Objektpasswort (8) kennt. Ebenfalls kann das Objekt (1) archiviert werden.

## Beschreibung

Die Erfindung betrifft ein Datenverarbeitungsobjekt mit Zugriffsschutz bzw. ein Verfahren zum Schutz eines Zugriffs auf ein Datenverarbeitungsobjekt.

Um Objekte gegen externe und interne Bedrohungen abzusichern wird häufig ein Schutz gegen unberechtigten Zugriff bereitgestellt, der so genannte Zugriffsschutz. Im Allgemeinen gelten als Zugriff ein Erzeugen, Lesen, Ändern, Löschen und Ausführen eines Objektes bzw. der Datenmengen eines Objektes, usw. Um Objekte gezielt schützen zu können, erhält z.B. ein Anwender von Windows-Systemen eine Benutzerkennung, mit der er sich beim System anmeldet (Login), um sich zu identifizieren. Eine Benutzerkennung ist eine eindeutige Identifikation, die einer Person zugeordnet ist, und enthält üblicherweise einen Anmeldenamen, mit dem sich die Person dem System gegenüber identifiziert. Eine solche Benutzerkennung erhält neben dem Anmeldenamen automatisch eine eindeutige Systemidentifikation (SID). Außerdem soll der Anwender bei der Anmeldung in aller Regel auch ein geheimes Benutzerpasswort angeben, um sicherzustellen, dass er sich nicht als jemand ausgibt, der er in Wirklichkeit nicht ist.

Ein derartiger Zugriffsschutz auf das Objekt kann durch ein System aber nur gewährleistet werden, solange das Objekt innerhalb dieses Systems verbleibt. Wird das Objekt beispielsweise auf ein anderes Medium exportiert, um es in einem anderen System (evtl. mit unberechtigten Benutzern) zu importierten, so ist das Objekt auf dem Medium nicht mehr durch den gleichen Zugriffsschutz geschützt. Insbesondere kann das Objekt in einem neuen System so eingespielt werden, dass ein Unbefugter alle Rechte auf das Objekt erhält.

Eine bekannte Lösung dafür ist, dass ein exportiertes Objekt bei geeigneter Transportform durch ein Passwort abgesichert wird. Beispielsweise kann eine Datei in ein "ZIP-File" exportiert werden, ebenso sieht die Software "Microsoft Word" vor, Dokumente mittels eines Kennworts zu schützen. Dies bedeutet aber einen Zusatzaufwand und darf organisatorisch nicht vergessen werden, da die Originalobjekte dies üblicherweise nicht unterstützen.

Der Erfindung liegt die Aufgabe zugrunde, ein Datenverarbeitungsobjekt mit Zugriffsschutz auf mindestens eine Datenmenge des Objekts und ein Verfahren zum Schutz eines Zugriffs auf mindestens eine Datenmenge eines Datenverarbeitungsobjekts zu ermöglichen.

Diese Aufgabe wird durch ein Datenverarbeitungsobjekt mit Zugriffsschutz auf mindestens eine Datenmenge des Objekts gelöst, mit Mitteln zum Zuordnen von Zugriffsberechtigungen zu Benutzerkennungen, wobei eine Zugriffsberechtigung den Zugriff auf mindestens eine Datenmenge ermöglicht, und mit einem Objektpasswort, das einen Zugriff auf die Datenmengen des Objekts und auf die Mittel zum Zuordnen der Zugriffsberechtigungen zu Benutzerkennungen ermöglicht.

Diese Aufgabe wird durch ein Verfahren zum Schutz eines Zugriffs auf mindestens eine Datenmenge eines Datenverarbeitungsobjekts gelöst, wobei Zugriffsberechtigungen zu Benutzerkennungen zugeordnet werden, wobei eine Zugriffsberechtigung den Zugriff auf mindestens eine Datenmenge ermöglicht, und wobei ein Objektpasswort den Zugriff auf die Datenmengen des Objekts und die Zuordnung der Zugriffsberechtigungen zu den Benutzerkennungen ermöglicht.

Der Erfindung liegt die Idee zugrunde, ein Datenverarbeitungsobjekt mit Objektpasswort und Zuordnung der Benutzerkennungen vor unbefugtem Zugriff auf eine Datenmenge des Objekts zu schützen. Dabei werden die Benutzerkennungen in einem System durch die Benutzerverwaltung des Systems geregelt. Die Zugriffsberechtigungen des Objekts werden zu den Benutzerkennungen zugeordnet. Zudem umfasst das Datenverarbeitungsobjekt ein Objektpasswort, das einen Zugriff auf die Datenmenge des Datenverarbeitungsobjekts und auf die Mittel zum Zuordnen der Zugriffsberechtigungen zu Benutzerkennungen ermöglicht. Dadurch ist sowohl eine benutzerspezifische Zugriffskontrolle als auch ein passwortgesicherter Zugriffsschutz auf das Objekt in diesem System und ebenfalls in anderen Systemen gewährleistet.

Die Zugriffsberechtigungen werden den Benutzerkennungen in der Regel abhängig von Rollen und/oder Rechten eines jeweiligen Benutzers, zugeordnet. Das Objekt kann dann mit einem Zugriffsschutz bearbeitet werden, ohne dass jeder Benutzer das Objektpasswort kennen muss.

Das Objektpasswort kann bei Erstellung des Objekts erstellt und später geändert werden und ist im Regelfall ein Teil des Datenverarbeitungsobjekts, damit kann das Objekt archiviert werden, ohne dass es seine Zugriffskontrolle verliert. Ebenfalls kann das Objekt in eine andere Umgebung (System oder Medium) transportiert werden, ohne dass es auf dem Weg oder bei einem Import in eine neue Umgebung von seiner Zugriffskontrolle befreit wird.

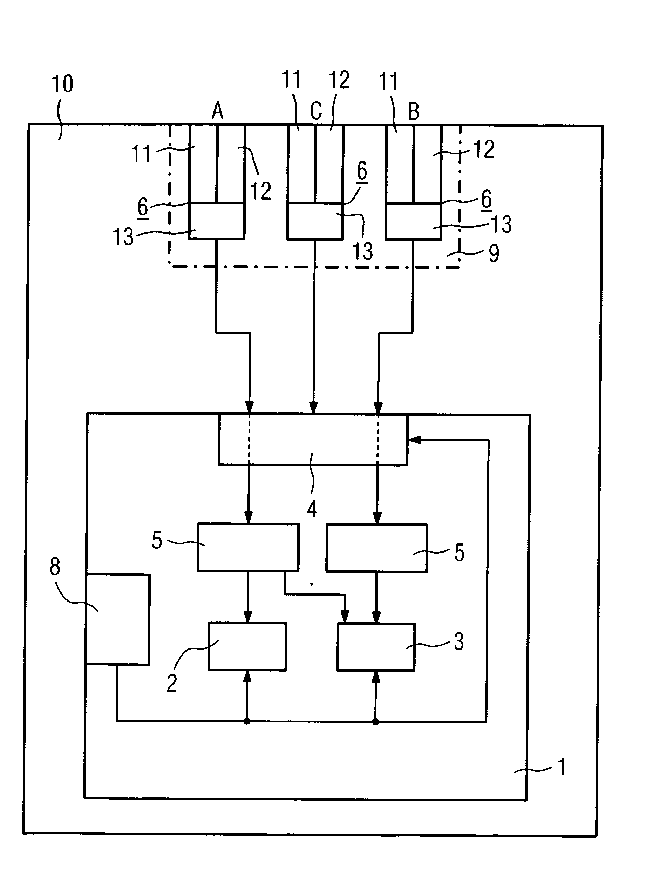

Die Erfindung wird im Folgenden anhand der Figur erläutert. Die Figur zeigt ein Beispiel für ein Datenverarbeitungsobjekt mit Zugriffsschutz.

Gemäß Ausführungsbeispiel wird ein Datenverarbeitungsobjekt 1 mit Zugriffsschutz auf mindestens eine Datenmenge 2 bzw. 3 des Datenverarbeitungsobjekts 1 in einem System 10 angegeben, wobei die Anmeldung (Login) eines Benutzers an dem System 10 durch eine Benutzerverwaltung 9 geregelt wird. Das hier genannte Datenverarbeitungsobjekt 1 ist häufig ein Engineering-Projekt eines industriellen Automatisierungssystems (z.B. Projekt in SIMATIC). Die Benutzerverwaltung 9 beinhaltet im Regelfall eine Liste von Einträgen der Benutzer, welche mit dem System 10 identifiziert werden sollen. Die Liste besteht gewöhnlich aus Benutzernamen 11, Passwörtern 12 und SID 13 (Systemidentifikationen) je nach einzelnem Benutzer. Das Datenverarbeitungsobjekts 1 umfasst Mittel 4 und kann damit Zugriffsberechtigungen 5 zu Benutzerkennungen 6 zuordnen, wobei die Zugriffsberechtigungen 5 den Zugriff auf mindestens eine Datenmenge 2 bzw. 3 ermöglichen können und in der Regel den Benutzerkennungen 6 abhängig von Rollen und/oder Rechten eines jeweiligen Benutzers zugeordnet werden. Zudem umfasst das Datenverarbeitungsobjekt 1 ein Objektpasswort 8, mit dem ein Zugriff auf die Datenmengen 2 bzw. 3 und auf die Mittel 4 zum Zuordnen der Zugriffsberechtigungen 5 zu Benutzerkennungen 6 ermöglicht wird.

Hierbei gibt es z.B. Benutzer A, B und C, die alle drei für das System 10 autorisiert sind. Im dargestellten Fall werden nur die Benutzer A und B bzw. ihre jeweilige Benutzerkennung 6 durch die Mittel 4, den Zugriffsberechtigungen 5 zugeordnet, um einen Zugriff auf die Datenmengen 2 bzw. 3 des Objekts 1 zu ermöglichen. Für den Benutzer C wird hingegen von der Mittel 4 der Zugriff auf das Objekt 1 gesperrt.

Da das Objektpasswort 8 einen Zugriff auf die Datenmengen 2 bzw. 3 und auf die Mittel 4 zum Zuordnen der Zugriffsberechtigungen 5 zu Benutzerkennungen 6 ermöglicht, ist es Benutzern, welche das Objektpasswort 8 kennen, möglich, direkt auf das Objekt 1 zuzugreifen.

Durch die Zuordnung der Zugriffsberechtigungen 5 kann festgelegt werden, welche Datenmenge für welchen Benutzer zur Verfügung steht. In diesem Beispiel sind die Datenmenge 2 und 3 für Benutzer A und die Datenmenge 3 für Benutzer B verfügbar.

Wird das Objekt 1 aus diesem System 10 in ein anderes System oder auf ein Trägermedium (z.B. CD oder Diskette) exportiert, erhält ein Benutzer nach dem Einspielen auf einem anderen System nur dann Zugriff auf das Objekt 1, wenn er entweder das Objektpasswort 8 kennt oder er in dem jeweiligen System bekannt ist und ihm von diesem System die Zugriffsberechtigung auf das Objekt 1 zugeordnet ist. Das Objekt 1 kann jedoch im Regelfall ohne Kenntnis des Objektpassworts exportiert und in dem neuen System eingespielt werden. Dabei wird das Objektpasswort 8 als ein Teil des Objekts 1 mit dessen Datenmengen zusammen in ein anderes System oder auf ein Medium exportiert, um das Objekt 1 gegen unbefugten Zugriff schützen zu können.
Außerdem bleibt der Zugriffschutz des Objekts 1 in einem neuen System gleich, wie zum Zeitpunkt der Auslieferung oder Exportierung aus dem originalen System 10, vorausgesetzt, dass das Objekt 1 in dem neuen System unter derselben Benutzerverwaltung 9 eingespielt wird.

Dem oben genannten Datenverarbeitungsobjekt 1 entsprechend wird ein Verfahren zum Schutz eines Zugriffs auf mindestens eine Datenmenge 2 bzw. 3 des Datenverarbeitungsobjekts 1 in einem System 10 angegeben. Dabei wird die Identifizierung eines Benutzers an dem System 10 im Regelfall durch eine Benutzerverwaltung 9 mittels Benutzername, Passwort und SID benutzerspezifisch geregelt. Zugriffsberechtigungen 5, die den Zugriff auf mindestens eine Datenmenge 2 oder 3 ermöglicht, werden zu den Benutzerkennungen 6 zugeordnet. Zudem wird ein Zugriff auf die Datenmengen 2 bzw. 3 und auf die Zuordnungen der Zugriffsberechtigungen 5 zu Benutzerkennungen 6 durch ein Objektpasswort 8 ermöglicht. In diesem Verfahren werden die Zugriffsberechtigungen 5 den Benutzerkennungen 6 in der Regel abhängig von Rollen und/oder Rechten eines jeweiligen Benutzers zugeordnet.

## Patentansprüche

1. Datenverarbeitungsobjekt (1) mit Zugriffsschutz auf mindestens eine Datenmenge (2, 3) des Objekts (1), mit Mitteln (4) zum Zuordnen von Zugriffsberechtigungen (5) zu Benutzerkennungen (6), wobei eine Zugriffsberechtigung (5) den Zugriff auf mindestens eine Datenmenge (2, 3) ermöglicht, und mit einem Objektpasswort (8), das einen Zugriff auf die Datenmengen (2, 3) des Objekts (1) und auf die Mittel (4) zum Zuordnen der Zugriffsberechtigungen (5) zu Benutzerkennungen (6) ermöglicht.

2. Datenverarbeitungsobjekt (1) nach Anspruch 1,
**dadurch gekennzeichnet, dass**
die Zugriffsberechtigungen (5) den Benutzerkennungen (6) abhängig von Rollen und/oder Rechten eines jeweiligen Benutzers zuordenbar sind.

3. Datenverarbeitungsobjekt (1) nach Anspruch 1 oder 2,
**dadurch gekennzeichnet, dass**
das Objektpasswort (8) ein Teil des Datenverarbeitungsobjekts (1) ist.

4. Verfahren zum Schutz eines Zugriffs auf mindestens eine Datenmenge (2, 3) eines Datenverarbeitungsobjekts (1), wobei Zugriffsberechtigungen (5) zu Benutzerkennungen (6) zugeordnet werden, wobei eine Zugriffsberechtigung (5) den Zugriff auf mindestens eine Datenmenge (2, 3) ermöglicht, und wobei ein Objektpasswort (8) den Zugriff auf die Datenmengen (2, 3) des Objekts (1) und die Zuordnung der Zugriffsberechtigungen (5) zu den Benutzerkennungen (6) ermöglicht.

5. Verfahren nach Anspruch 4,
**dadurch gekennzeichnet, dass**
die Zugriffsberechtigungen (5) den Benutzerkennungen (6) abhängig von Rollen und/oder Rechten eines jeweiligen Benutzers zugeordnet werden.
